# EUROPÄISCHE PATENTSCHRIFT

(11) **EP 0 672 671 B1**
(45) Veröffentlichungstag und Bekanntmachung des Hinweises auf die Patenterteilung: **29.10.1997**
(21) Anmeldenummer: 95102719.2
(22) Anmeldetag: 25.02.1995
(51) Int. Cl.: C07F 5/06, C08F 4/02

(54) **Verfahren zur Herstellung von Alkylaluminoxan auf inerten Trägermaterialien**
Process for producing alkyl-aluminoxane on inert carriers
Procédé de préparation d'aluminoxanes alkylés sur des supports inertes

(30) Priorität: 18.03.1994 DE 4409249
(43) Veröffentlichungstag der Anmeldung: 20.09.1995
(73) Patentinhaber: Witco GmbH, 59192 Bergkamen (DE)
(72) Erfinder: Becker, Ralf-Jürgen, Dr., D-59075 Hamm (DE); Gürtzgen, Stefan, Dr., D-42369 Wuppertal (DE); Kutschera, Dirk, D-44135 Dortmund (DE)

(56) Entgegenhaltungen:
- EP-A- 0 315 234
- WO-A-89/02453
- GB-A- 1 176 692
- US-A- 5 041 585

## Beschreibung

Alkylaluminoxan, insbesondere Methylaluminoxan, gewinnt zunehmend an Bedeutung als essentieller Bestandteil einer neuen Generation von Katalysatorsystemen zur Herstellung von Polyolefinen ("Single Site Catalysts"). Diese neuen Katalysatoren bestehen im wesentlichen, wie bereits aus der klassischen Ziegler-Natta-Katalyse bekannt, aus einer Übergangsmetallverbindung als Katalysator sowie dem eingangs erwähnten Alkylaluminoxan als aluminiumorganischer Cokatalysator-Komponente. Als Übergangsmetallverbindung werden bevorzugt Cyclopentadiendienyl-, Indenyl- oder Fluorenylderivate der Gruppe IVa eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüberhinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig in fast allen Fällen ist Jedoch die Tatsache, daß zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000!). Durch den hohen Preis der Alkylaluminoxane einerseits und durch in manchen Fällen erforderliche zusätzliche Polymer-Aufarbeitungsschritte ("deashing steps") andererseits wäre eine Polymerproduktion in technischem Maßstab auf Basis solcher Katalysatorsysteme vielfach unwirtschaftlich. Hinzu kommt, daß das für die Formulierung von Alkylaluminoxanen, insbesondere Methylaluminoxan, vielfach verwendete Lösungsmittel Toluol aus Gründen der Lagerstabilität der Formulierungen (starke Tendenz zur Gelbildung), sowie im Hinblick auf den Anwendungsbereich der letztendlich resultierenden Polyolefine zunehmend unerwünscht ist.

Eine signifikante Reduktion der benötigten Alkylaluminoxan-Menge im Bezug auf die Übergangsmetall-Komponente kann erreicht werden, indem Alkylaluminoxan auf inerte Trägermaterialien, bevorzugt SiO₂, aufgebracht wird (J. C. W. Chien, D. He, J. Polym. Science Part A, Polym. Chem., Vol.29, 1603-1607 (1991). Solche geträgerten Materialien besitzen darüberhinaus den Vorteil der leichten Abtrennbarkeit bei Polymerisationen in kondensierter Phase (Herstellung hochreiner Polymere) bzw. der Einsetzbarkeit als frei fließende Pulver in modernen Gasphasenprozessen, wobei die Kornmorphologie des Polymeren direkt durch die Partikelform des Trägers vorgegeben werden kann. Darüber hinaus sind trägerfixierte Alkylaluminoxane als trockene Pulver physikalisch stabiler als Lösungen mit vergleichbarem Al-Gehalt. Dies gilt insbesonders für Methylaluminoxan, das, wie bereits erwähnt, in toluolischer Lösung nach einer gewissen Lagerzeit zur Gelbildung neigt.

In der Literatur werden bereits einige Möglichkeiten beschrieben, Alkylaluminoxane auf Trägern zu fixieren:

Die EP 0 369 675 (Exxon Chemical) beschreibt ein Verfahren, in dem die Immobilisierung von Alkylaluminoxanen durch Umsetzung einer ca. 10 %igen Lösung von Trialkylaluminium in Heptan mit hydratisiertem Silica (8,7 Gew.-% H₂O) erreicht wird.

In EP 0 442 725 (Mitsui Petrochemical) wird die Immobilisierung durch Reaktion einer Toluol/Wasser-Emulsion mit einer ca. 7 %igen Lösung von Trialkylaluminium in Toluol in Gegenwart von Silica bei Temperaturen von -50 °C bis +80 °C bewirkt.

Eine weitere Alternative eröffnet US-PS 5 026 797 (Misubishi Petrochemical) durch Umsetzung bereits vorgefertigter Alkylaluminoxan-Lösungen mit Silica (vorgetrocknet bei 600 °C) bei 60 °C und nachfolgende Auswaschung des nicht immobilisierten Alkylaluminoxan-Anteils durch Toluol.

US-PS 4 921 825 (Mitsui Petrochemical) letztendlich beschreibt ein Verfahren zur Immobilisierung von Alkylaluminoxan durch Fällung aus toluolischen Lösungen mittels n-Decan in Gegenwart von Silica.

Diese Verfahren sind teilweise technisch aufwendig, da sie unter anderem zu Beginn niedrige Reaktionstemperaturen bzw. mehrstufige Aufarbeitungsprozesse und dadurch Ausbeuteverluste im Hinblick auf die eingesetzte Menge an Aluminium in Form von Aluminiumtrialkylen beinhalten. Darüberhinaus wird die Raum-/Zeit-Ausbeute durch den obligaten Einsatz relativ hoher Mengen an Lösungsmittel zum Teil erheblich beeinträchtigt.

Aufgabe der vorliegenden Erfindung war es daher, diese Nachteile des Standes der Technik zu überwinden und ein wirtschaftliches Verfahren bereitzustellen, mittels welchem Alkylaluminoxane ohne Mitverwendung von organischen Lösungsmitteln in hoher Ausbeute und Homogenität in reproduzierbarer Weise auf inerten Trägermaterialien fixiert werden können, wobei die Kornmorphologie des Trägers erhalten bleibt und die Produkte letztlich als freifließende Pulver vorliegen.

Überraschenderweise wurde nun gefunden, daß sämtliche vorab aufgeführten Nachteile dadurch beseitigt werden können, daß man die Synthese von Alkylaluminoxanen, insbesondere Methylaluminoxanen (MAO) und deren Fixierung auf inerten Trägern, unmittelbar über die Gasphase ohne jeglichen Einsatz von Lösungsmitteln und ohne zusätzliche Verfahrensschritte ausführt. Das erhaltene Endprodukt ist gekennzeichnet durch die Eigenschaft eines frei fließenden Pulvers.

Gegenstand der vorliegenden Erfindung ist somit ein Verfahren zur Herstellung von auf inerten Trägermaterialien fixierten Alkylaluminoxanen aus Alkylaluminiumverbindungen und Wasser, dadurch gekennzeichnet, daß die Reaktanden mit dem Gasstrom in Wirbelschichtreaktoren eindosiert und nach der Reaktion unmittelbar aus der Gasphase auf den Träger fixiert werden.

Ein weiterer Gegenstand der Erfindung sind auf Trägermaterialien fixierte Aluminoxane, hergestellt gemäß dem erfindungsgemäßen Verfahren.

Weitere Gegenstände der Erfindung werden durch die Ansprüche gekennzeichnet.

Die Herstellung erfolgt nach allgemein bekannten Wirbelschichtverfahren. Unter Wirbelschicht versteht man eine feinkörnige Feststoffschicht, die von einem hindurchströmenden Fluid soweit aufgelockert ist, daß die Partikel über eine bestimmte Strecke einen Ortswechsel vornehmen können (Walter Wagner Kamprath, Reihe Technik, Wärmeübertrag, 2. Auflage, Würzburg, Verlag Vogel, 1988, Seite 143).

Dabei unterscheidet man zwischen einer stehenden und zirkulierenden Wirbelschicht (Dieter, Onken, Leschonski, Grundzüge der mechanischen Verfahrenstechnik, 1. Auflage, München; Wien: Verlag Hanser 1986, Seite 40 - 47, 298 - 300).

Gemäß dem erfindungsgemäßen Verfahren werden die Wirbelschichten mittels kontinuierlicher Inertgasströme aufrecht erhalten. Der Druck innerhalb der Reaktoren ist in weiten Bereichen wählbar und richtet sich nach den Erfordernissen.

In Wirbelschichtreaktoren werden Feststoffpartikel durch einen aufsteigenden Gasstrom aufgewirbelt. Hierbei kann der Feststoff als Katalysator oder als Reaktionspartner dienen (Vauck, Müller, Grundoperationen chemischer Verfahrenstechnik, 8. Aufl. New York; Weinheim: VCH Verlagsgesellschaft mbH, Seite 230).

Die Feststoffpartikel und die Gasphase können während des Betriebs kontinuierlich ausgetauscht werden.

Zur Aufrechterhaltung der Wirbelschicht können darüber hinaus die als Reaktionsprodukte anfallenden rezikulierten Alkane dienen, sofern diese unter den gegebenen Reaktionsbedingungen gasförmig vorliegen. Die Dosierung der Reaktanden Trialkylaluminium, insbesondere Trimethylaluminium (TMA) und Wasser in den Wirbelschichtreaktor kann über die verwendeten Gasströme erfolgen. Durch Regulierung der jeweiligen Gasströme läßt sich sowohl der Oligomerisationsgrad (n) des Alkylaluminoxans, als auch der Beladungsgrad des Trägers systematisch steuern. Bei dafür geeigneten Trägermaterialien wie z. B. SiO₂ kann der Reaktionspartner Wasser darüberhinaus in an die Oberfläche des Trägers gebundener Form eingebracht werden.

Auch die direkte Einspeisung von Trialkylaluminium, insbesondere Trimethylaluminium (TMA) und Wasser in die Gasphase (Gasstrom dient hier einzig zur Aufrechterhaltung der Wirbelschicht) sowie ein kontinuierliches Betreiben der Anlage ist möglich. In allen Fällen bleibt die ursprüngliche Kornmorphologie des Trägers erhalten.

Zur Herstellung der Aluminoxane kann das molare Verhältnis von Wasser zu Alkylaluminiumverbindungen in Bereichen von 0,5 : 1 bis 1,3 : 1, vorzugsweise 0,9 : 1 bis 1,2 : 1 liegen.

Darüber hinaus kann der mittlere Oligomerisationsgrad n, der in der mittleren Molmasse des Reaktionsproduktes zum Ausdruck kommt, durch geeignete Dosierung der Reaktionspartner und Steuerung der Reaktionsparameter gezielt beeinflußt werden. So kann das Molverhältnis H₂O/Aluminiumtrialkyl, insbesondere auch bei TMA auf den gewünschten Wert eingestellt werden. Dies ist von besonderer Bedeutung, da die Aktivität von Aluminoxanen als Cokatalysator in der Olefinpolymerisation offenbar vom Oligomerisationsgrad des verwendeten Aluminoxans abhängig ist (Lit.: W. Kaminsky, Nachr. Chem. Tech. Lab. 29, 373-7 (1981); W. Kaminsky et.al., Makromol. Chem., Macromol. Symp. 3, 377-87 (1986)).

Als aluminiumorganische Verbindungen sind prinzipiell alle auf diesem Gebiet üblichen Verbindungen verwendbar, welche mit Wasser zu Aluminoxanen hydrolysiert werden können. Erfindungsgemäß bevorzugt sind Trialkylaluminiumverbindungen (R)₃Al mit kurzkettigen Alkylresten mit 1 - 10 C-Atomen, insbesondere 1 - 5 C-Atomen wie Methyl-, Ethyl-, Propyl-, isoPropyl-, Butyl-, isoButyl-, tert. Butyl-, Pentyl-Rest. Erfindungsgemäß bevorzugt wird Trimethylaluminium.

Als erfindungsgemäß verwendbare Trägermaterialien werden die porösen Oxide eines oder mehrerer der Elemente der Gruppen II, III oder IV des Periodensystems wie ZrO₂, TiO₂, B₂O₃, CaO, ZnO, BaO, vorzugsweise Al₂O₃ und MgO und insbesondere SiO₂, eingesetzt.

Diese Trägermaterialien können Korngrößen im Bereich von 1 - 300 µm, vorzugsweise 10 - 200 µm, aufweisen; Oberflächen von 10 - 1000 m²/g, insbesondere 100 - 500 m²/g; N₂-Porenvolumina von 0,5 - 3 cm³, vorzugsweise 1 - 2 cm³.

Diese Träger sind handelsübliche Materialien, welche die angegebenen Werte in statistischer Verteilung enthalten.

Der Wassergehalt der Trägermaterialien kann je nach Verfahrensweise zwischen ca. 0 bis 15 Gew.-% variieren. Die gewünschten Wassergehalte können nach den allgemein bekannten Hydratisierungsverfahren oder Calcinierungsverfahren von handelsüblichen Trägermateriallen eingestellt werden.

Das Verhältnis von Träger zu Aluminoxan ist innerhalb relativ weiter Grenzen variierbar, erfindungsgemäß wird es so gewählt, daß auf dem resultierenden freifließenden Pulver aus Trägermaterial und Aluminoxan 3 - 40 Gew.-%, vorzugsweise 5 - 25 Gew.-% Aluminium, in Form von Aluminoxanen vorliegen.

Das erfindungsgemäße Verfahren ermöglicht die Herstellung von geträgerten Aluminoxanen mit nahezu quantitativen Ausbeuten an immobilisiertem Aluminium, bezogen auf eingesetzte Trialkylaluminiumverbindungen. Aufgrund gezielt einstellbarer und reproduzierbarer Verfahrensbedingungen weisen diese mit dem erfindungsgemäßen Verfahren hergestellten geträgerten Alkylaluminoxane, insbesondere das Methylaluminoxan, hohe Aktivitäten als Cokatalysatoren auf und sind somit hervorragend geeignet für die weitere Herstellung von Katalysator-Systemen für die Olefinpolymerisation.

Das erfindungsgemäße Verfahren wird im folgenden anhand der folgenden Beispiele illustriert. Die in den Beispielen angegebenen Werte zu den Prozeßvariablen - Temperatur, Druck und Volumenströme - sind über die gesamte Versuchsdurchführung gemittelte Werte. Die Versuche wurden so durchgeführt, daß diese Mittelwerte innerhalb des bevorzugten Bereiches lagen.
Die Verfahrensparameter können innerhalb der angegebenen Minima und Maxima zur Variierung bzw. Optimierung von Produkten herangezogen werden.

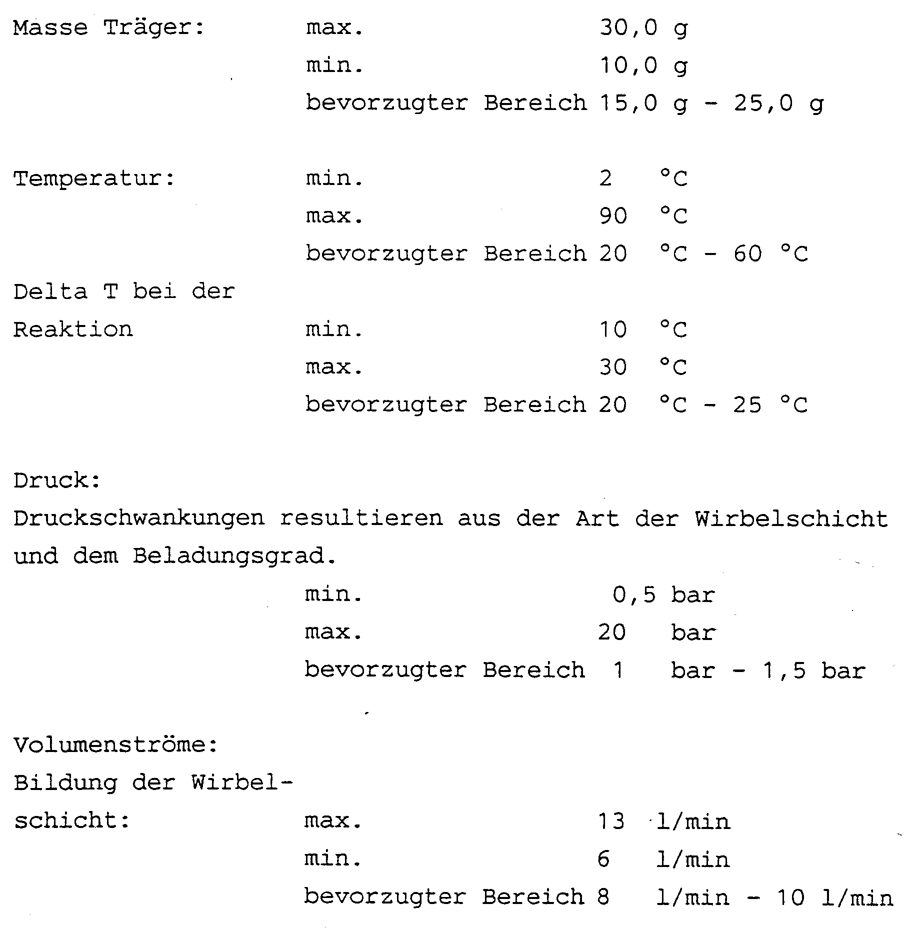

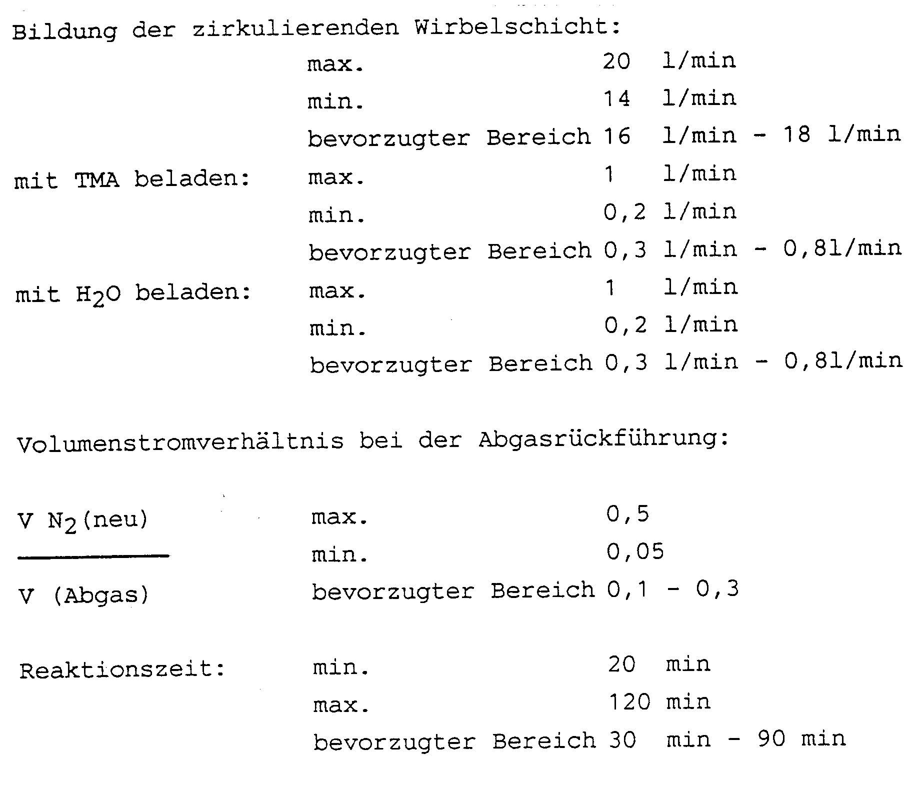

### Beispiele

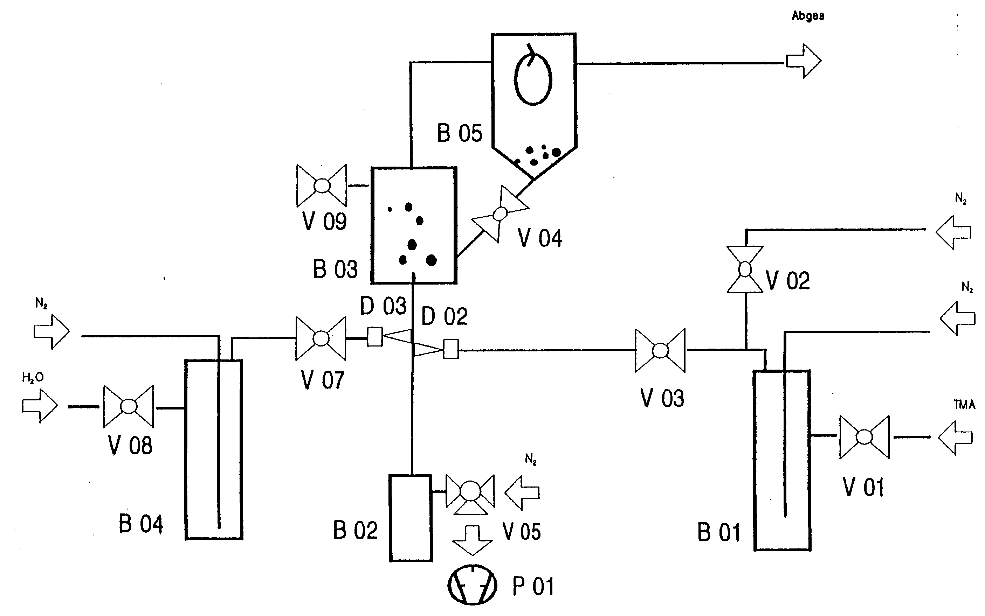

### Beispiel 1: (Simultandosierung über separate Gasströme Abb. 1)

Alle Ventile waren in der Grundstellung geschlossen. Der Feststoff wurde über Ventil V 09 in B 03 vorgelegt. Zur Bildung einer Wirbelschicht wurde Ventil V 05 geöffnet und N₂ zugeführt. Über Ventil V 04 wurde der abgeschiedene Feststoff wieder nach B 03 geführt.

In den Dosierbehälter B 01 wurde über Ventil V 01 TMA und in den Dosierbehälter B 02 über Ventil V 08 H₂O zugegeben.

Zuerst wurde über Ventil V 03 ein mit Trimethylaluminium (TMA) beladener Inertgasstrom in den Reaktionsbehälter B 03 geleitet. Wenn sich die Wirbelschicht stabilisiert hatte, wurde über Ventil V 07 ein zweiter mit H₂O beladener Inertgasstrom nach B 03 geführt.

Nach der Reaktionszeit wurde die TMA bzw. H₂O-Zugabe durch Schließen der Ventile V 07 und V 03 gestoppt. Über Ventil V 05 wurde die Wirbelschicht unterbrochen und das Produkt fiel in B 02.

### Reaktionsparameter

- Träger:: Oberfläche N₂-BET = 316 m²/g; Partikelgrößenverteilung = 20 - 80 µm; N₂-Porenvolumen = 1,55 ml/g
- Masse Träger:: 18,3 g
- Reaktorvorlumen:: 2 l
- Volumenstrom N₂ (Bildung der Wirbelschicht):: 8,31 l/min
- Volumenstrom N₂ (mit TMA beladen):: 0,51 l/min
- Volumenstrom N₂ (mit H₂O beladen):: 0,51 l/min
- Reaktionszeit:: 90 min
- Reaktionstemperatur:: min 28 °C
max 34 °C
- Druck:: ca. 1 bar

Das erhaltene Produkt besaß einen Al-Gehalt von 6,6 Gew.-% und ein Methyl/Al-Verhältnis von 0,96.

### Beispiel 2:

Die Versuchsdurchführung erfolgte analog Beispiel 1 mit der Abwandlung, daß 22,6 g Träger eingesetzt wurden und die Reaktionszeit 30 min betrug.

Der Al-Gehalt des Produktes betrug 3,2 Gew.-% und das Methyl/Al-Verhältnis 0,96.

### Beispiel 3: (Reaktand H₂O auf Träger in adsorbierter Form)

Die Versuchsdurchführung erfolgte analog Beispiel 1 mit der Abwandlung, daß 19 g hydratisierte Träger mit 2,6 Gew.-% Wasser zugesetzt wurden. Da dadurch eine zusätzliche Eindosierung von H₂O nicht erfolgen sollte, blieb Ventil V 07 über die gesamte Versuchszeit geschlossen.

Nach einer Reaktionszeit von 30 min hatte das Produkt einen Al-Gehalt von 2,6 Gew.-% und ein Methyl/Al-Verhältnis von 0,98.

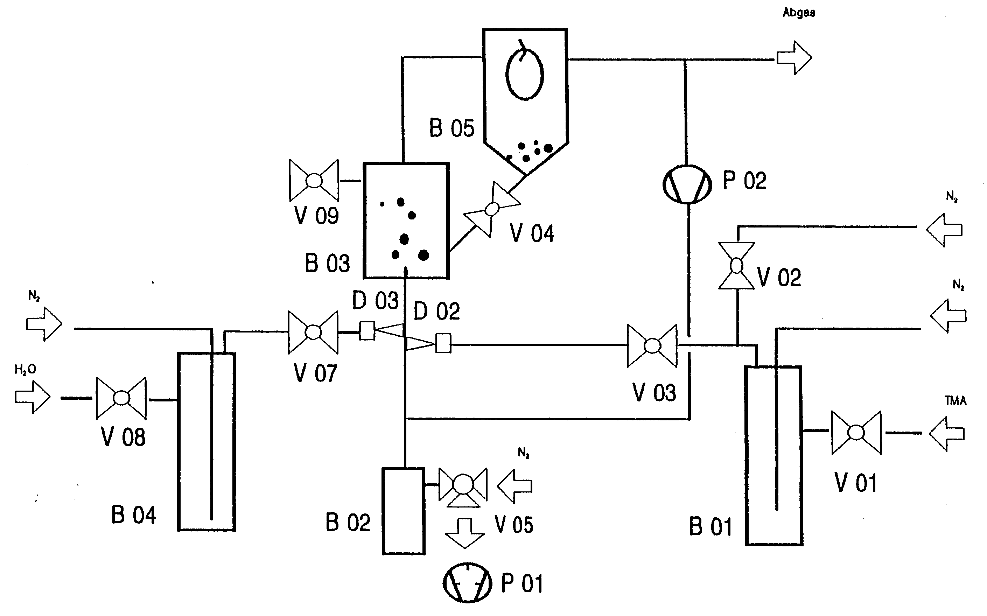

### Beispiel 4: (Rückführung der Abgase Abb. 2)

Alle Ventile waren in der Grundstellung geschlossen. Der Feststoff wurde über Ventil V 09 in B 03 vorgelegt. Zur Bildung einer Wirbelschicht wurde Ventil V 05 geöffnet und N₂ zugeführt. Über Ventil V 04 wurde der abgeschiedene Feststoff wieder nach B 03 geführt.

In den Dosierbehälter B 01 wurde über Ventil V 01 TMA und in den Dosierbehälter B 02 über Ventil V 08 H₂O zugegeben.

Zuerst wurde über Ventil V 03 ein mit Trimethylaluminium (TMA) beladener Inertgasstrom in den Reaktionsbehälter B 03 geleitet. Wenn sich die Wirbelschicht stabilisiert hatte, wurde über Ventil V 07 ein zweiter mit H₂O beladener Inertgasstrom nach B 03 geführt.

Der Kompressor P 02 zur Rückführung der Abgase wurde eingeschaltet und gleichzeitig der Volumenstrom N₂ zur Bildung der Wirbelschicht reduziert. Nach der Reaktionszeit wurde der Kompressor P 02 ausgeschaltet und die TMA bzw. H₂O-Zugabe durch Schließen der Ventile V 07 und V 03 gestoppt. Über Ventil V 05 wurde die Wirbelschicht unterbrochen und das Produkt fiel in B 02.

Die Reaktionsparameter waren analog zu Beispiel 1 mit folgenden Ausnahmen:
- Masse Träger:: 21,1 g
- Volumenstrom N₂ (Bildung der Wirbelschicht):: 17,2 l/min
- Volumenstromverhältnis (V N₂(neu)/V (Abgas)):: 0,2

Der Al-Gehalt des Produktes betrug 6,8 Gew.-% und das Methyl/Al-Verhältnis 0,96.

## Patentansprüche

1. Verfahren zur Herstellung von auf inerten Trägermaterialien immobilisierten Alkylaluminoxanen aus Alkylaluminiumverbindungen und Wasser, dadurch gekennzeichnet, daß die Reaktanden mit dem Gasstrom in Wirbelschichtreaktoren eindosiert und nach der Reaktion unmittelbar aus der Gasphase auf den Träger fixiert werden.

2. Verfahren gemäß Anspruch 1, dadurch gekennzeichnet, daß die Reaktanden direkt in den Reaktor eindosiert werden.

3. Verfahren gemäß Anspruch 1, dadurch gekennzeichnet, daß das molare Verhältnis von Wasser : Alkylaluminiumverbindungen im Bereich von 0,5 : 1 bis 1,3 : 1 liegt.

4. Verfahren gemäß Anspruch 1, dadurch gekennzeichnet, daß als Alkylaluminiumverbindung Trimethylaluminium eingesetzt wird.

5. Verfahren gemäß Anspruch 1, dadurch gekennzeichnet, daß als Trägermaterialien Al₂O₃, MgO oder SiO₂ mit Korngrößen von 1 - 300 µm, Oberflächen von 10 - 1000 m²/g und Porenvolumina von 0,5 - 3 cm³ und Wassergehalten von 0 - 15 Gew.-% eingesetzt werden.

6. Verfahren gemäß Anspruch 1, dadurch gekennzeichnet, daß der Druck im Reaktor bei 1 - 20 liegt.

## Claims

1. A process for the production of alkylaluminoxanes immobilised on inert support materials from alkylaluminium compounds and water, characterised in that the reactants are metered into fluidised bed reactors with the gas stream and, after the reaction, are fixed to the support directly from the gas phase.

2. A process according to claim 1, characterised in that the reactants are metered directly into the reactor.

3. A process according to claim 1, characterised in that the molar ratio of water : alkylaluminium compounds is in the range of from 0.5 : 1 to 1.3 : 1.

4. A process according to claim 1, characterised in that trimethylaluminium is used as the alkylaluminium compound.

5. A process according to claim 1, characterised in that Al₂O₃, MgO or SO₂ having particles sizes of 1 - 300 µm, surface areas of 10 - 1000 m²/g and pore volumes of 0.5 - 3 cm³ and water contents of 0 - 15 % by weight are used as the support materials.

6. A process according to claim 1, characterised in that the pressure in the reactor is 1 - 20.

## Revendications

1. Procédé pour préparer des alkylaluminoxanes immobilisés sur des matériaux supports inertes, à partir d'alkylaluminiums et d'eau, caractérisé en ce que les substances participant à la réaction sont introduites avec le courant gazeux dans des réacteurs à lit fluidisé, et, après la réaction, sont immédiatement fixés sur le support à partir de la phase gazeuse.

2. Procédé selon la revendication 1, caractérisé en ce que les substances participant à la réaction sont directement introduites dans le réacteur.

3. Procédé selon la revendication 1, caractérisé en ce que le rapport en moles entre l'eau et l'alkylaluminium est compris entre 0,5:1 et 1,3:1.

4. Procédé selon la revendication 1, caractérisé en ce qu'on utilise du triméthylaluminium en tant qu'alkylaluminium.

5. Procédé selon la revendication 1, caractérisé en ce qu'on utilise comme matériaux supports Al₂O₃, MgO ou SiO₂, avec une granulométrie de 1-300 µm, une aire spécifique de 10-1000 m²/g et un volume des pores de 0,5-3 cm³ et une teneur en eau de 0-15 % en poids.

6. Procédé selon la revendication 1, caractérisé en ce que la pression régnant dans le réacteur est de 1-20 bar.
